# EUROPÄISCHE PATENTSCHRIFT

(11) **EP 1 593 898 B1**
(45) Veröffentlichungstag und Bekanntmachung des Hinweises auf die Patenterteilung: **30.05.2012**
(21) Anmeldenummer: 05101974.3
(22) Anmeldetag: 14.03.2005
(51) Int. Cl.: F16L 13/14

(54) **Dichtelement**
Sealing element
Elément d'étanchéité

(30) Priorität: 07.05.2004 DE 202004007290 U
(43) Veröffentlichungstag der Anmeldung: 09.11.2005
(73) Patentinhaber: VIEGA GmbH & Co. KG, 57439 Attendorn (DE)
(72) Erfinder: Viegener, Walter, 57439 Attendorn (DE)
(74) Vertreter: Cohausz & Florack

(56) Entgegenhaltungen:
- EP-A- 0 989 348
- EP-A- 1 201 982

## Beschreibung

Die vorliegende Erfindung betrifft ein Dichtelement für eine Pressverbindung, mit einem im Wesentlichen ringförmigen Körper aus einem elastischen Material, an dem an der Innenseite und an der Außenseite mindestens eine umlaufende stetige Dichtkante ausgebildet ist.

Aus der DE 297 21 760 ist eine Pressverbindung zwischen einem Fitting und einem Metallrohrende bekannt, bei dem an dem Fitting eine Aufnahme für einen Dichtring und eine Aufnahme für einen Schneidring ausgebildet ist. Beim Verpressen des Fittings graben sich Schneidzähne des Schneidringes in das Material des Rohrendes ein um eine axiale Fixierung des Rohres bereitzustellen und zu verhindern, dass das Rohr aus dem Fitting wieder herausgezogen werden kann. Der benachbart angeordnete Dichtring sorgt hingegen für eine dauerhafte Abdichtung der Verpressung, auch wenn unterschiedliche Temperaturen oder andere Umgebungseinflüsse die Verbindung belasten. Dabei ist nachteilig, dass die Anordnung einer Aufnahme für den Dichtring und einer zweiten Aufnahme für den Schneidring relativ aufwendig in der Herstellung ist.

Aus der EP 0 989 348 ist ein Dichtelement für eine Pressverbindung bekannt, die alle Merkmale des Oberbegriffs des Anspruchs 1 aufweist.

Es ist daher Aufgabe der vorliegenden Erfindung ein Dichtelement für eine Pressverbindung zu schaffen, das bei einem einfachen Aufbau eine effektive Abdichtung gewährleistet.

Diese Aufgabe wird mit einem Dichtelement mit den Merkmalen des Anspruches 1 gelöst. Erfindungsgemäß weist das Dichtelement einen ringförmigen Körper aus einem elastischen Material auf, in dem mindestens ein Schneidelement eingelagert ist, das beim Verpressen mit einer Schneidkante aus dem elastischen Material herausbewegbar ist. Dadurch wird beim Verpressen des Dichtelementes sowohl eine Abdichtung durch die umlaufenden Dichtkanten erreicht, aber zusätzlich auch eine axiale Fixierung, da das Schneidelement mit der Schneidkante eine entsprechende Einprägung vornehmen kann und ein Bewegen der Pressverbindung vermieden wird.

Vorzugsweise ist die Schneidkante an einer inneren Oberfläche des Dichtelementes angeordnet. Solche Dichtelemente werden insbesondere für Pressverbindungen im Installationsbereich eingesetzt, sodass die Schneidkante des Dichtelementes dann an dem Außenumfang eines Rohrendes eingreift. Dadurch wird eine axiale Relativbewegung zwischen dem Rohrende und dem umgebenen Fitting vermieden, sodass eine Abdichtung gewährleistet werden kann.

Gemäß einer weiteren Ausführungsform der Erfindung sind mehrere Schneidelemente vorgesehen, die gekrümmt ausgebildet sind entsprechend der Kontur des ringförmigen Körpers. Dabei sind mehrere Schneidelemente über den Umfang verteilt angeordnet, die zwischen sich einen Spalt ausbilden. Dadurch behält das Dichtelement seine Flexibilität und Elastizität und kann leicht montiert werden. Denn die Funktion der Schneidelemente erfordert es, dass ein harter Werkstoff, wie Metall gewählt wird, der sich nicht ohne weiteres elastisch verbiegen lässt. Sofern die Schneidelemente nur segmentartig angeordnet sind, kann das Dichtelement jedoch nach wie vor elastisch bewegt werden.

Vorzugsweise erstrecken sich die Schneidelemente in radialer Richtung von einer inneren Oberfläche zu einer äußeren Oberfläche. Dadurch kann beim Verpressen sich ein Schneidelement sowohl an der Innenseite als auch an der Außenseite in ein Material eines Rohrendes bzw. eines Fittings eingraben, sodass Axialkräfte über die Schneidelemente abgetragen werden können. Hierbei sind die Schneidelemente vorzugsweise im Querschnitt V-förmig ausgebildet und weisen einen gegenüber der radialen Richtung schräg verlaufenden Schenkel auf, der sich bis zu einer Oberfläche des Dichtelementes erstreckt. Dadurch kann der Schenkel Druck- oder Zugbelastungen aufnehmen und die Funktion der Abstützung übernehmen.

Gemäß einer weiteren Ausgestaltung der Erfindung ist benachbart zu den Schneidelementen ein Dichtring angeordnet, der über einen Steg mit dem Abschnitt verbunden ist, in dem die Schneidelemente eingelagert sind. Die in axialer Richtung gesehen getrennte Ausbildung des Dichtringes von den Schneidelementen hat den Vorteil, dass beim Verpressen keine Beschädigung der Dichtkanten erfolgen kann. Die runde Querschnittsform des Dichtringes, vorzugsweise kreisförmige Querschnittsform sorgt dabei für eine innere und eine äußere umlaufende Dichtkante, die je nach Kontur des äußeren bzw. inneren Bauteils angeordnet ist. Die Verbindung über einen Stegabschnitt mit dem übrigen Abschnitt des Dichtelementes besitzt den Vorteil, dass nur ein Bauteil für die Abdichtung und die Haltefunktion montiert werden muss.

Das Dichtelement wird bevorzugt bei einer Pressverbindung im Installationsbereich eingesetzt, bei dem ein verpressbarer Stutzen eines Fittings oder einer Armatur vorgesehen ist, in den ein Rohrende eingeschoben ist und an den eine Aufnahme mit einem solchen Dichtring angeordnet ist.

Die Erfindung wird nachfolgend anhand eines Ausführungsbeispiels mit Bezug auf die beigefügten Zeichnungen näher erläutert. Es zeigen:

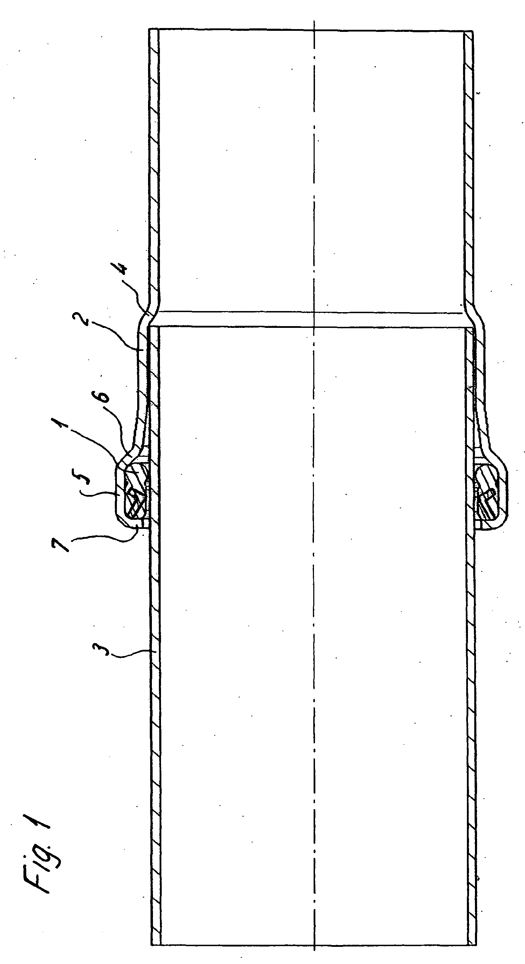

- Figur 1: eine Schnittansicht einer Verbindungsanordnung mit einem erfindungsgemäßen Dichtelement;
- Figur 2: eine vergrößerte Ansicht des Dichtelementes der Figur 1;
- Figur 3A: eine Schnittansicht des Dichtelementes der Figur 1
- Figur 3B: eine perspektivische Ansicht des Dichtelementes der Figur 1;
- Figur 3C: eine perspektivische Ansicht der Schneidelemente des Dichtelementes der Figur, und
- Figur 3D: eine Schnittansicht des Dichtelementes der Figur 1.

Ein Dichtelement 1 für eine Pressverbindung ist innerhalb eines Stutzens 2 eines Fittings oder einer Armatur angeordnet. In den Stutzen 2 ist ein Rohrende 3 bis zu einem Anschlag 4 eingeschoben. An dem Stutzen 2 ist eine Aufnahme 5 ausgebildet, die einen größeren Durchmesser besitzt als der übrige Teil des Stutzens 2. Die Aufnahme 5 ist im Wesentlichen u-förmig im Querschnitt ausgebildet und weist zwei radial nach innen hervorstehende Schenkel 6 und 7 auf, wobei der Schenkel 7 ein abgekantetes Ende des Stutzens 2 ist und der Schenkel 6 einen Übergang zwischen einem sich in Axialrichtung erstreckenden Abschnitt der Aufnahme 5 und einem weiteren Bereich des Stutzens 2 ausbildet.

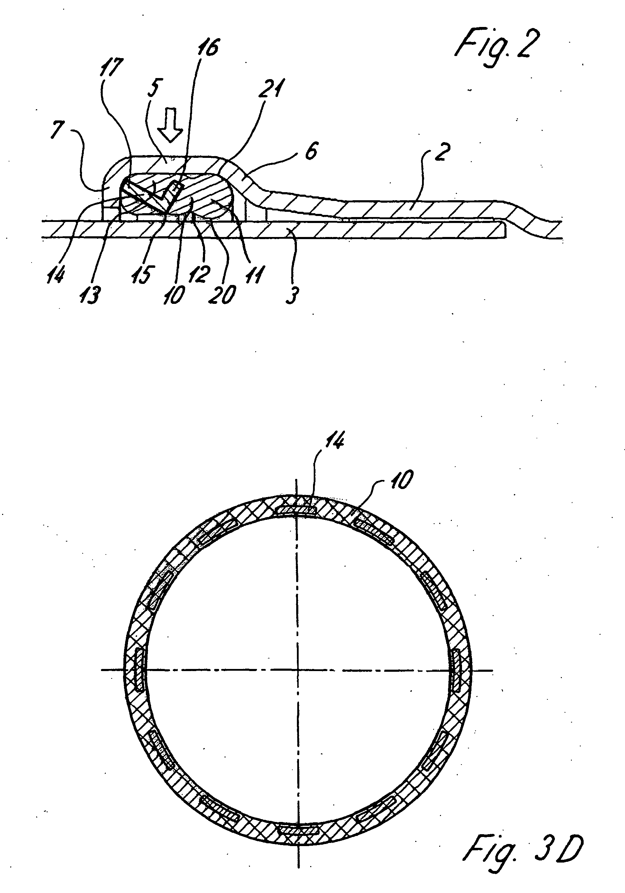

Wie in der Darstellung der Figur 2 zu erkennen ist, besitzt das Dichtelement einen im Wesentlichen ringförmigen Körper 10 aus einem elastischen Material, das auf einer Seite einen im Querschnitt kreisförmigen Dichtring 11 aufweist, das über einen Stegabschnitt mit einem Abschnitt 13 verbunden ist, in dem Schneidelemente 14 eingelagert sind. Die Schneidelemente sind im Querschnitt V-förmig ausgebildet und weisen eine nach innen gerichtete Schneidkante 15 und zwei sich schräg nach außen erstreckende Schenkel 16 und 17 auf.

Wie mit dem Pfeil dargestellt ist, kann die Aufnahme 5 zur Herstellung einer Pressverbindung radial nach innen verpresst werden, wodurch sich zwischen dem Dichtring 11 eine innere umlaufende stetige Dichtkante 20 mit dem Rohrende ausbildet und an der Außenseite eine umlaufende stetige Dichtkante 21 vorgesehen ist, die für eine Abdichtung im äußeren Bereich sorgt. Beim Verpressen wird dabei ein solcher Druck auf die Schneidelemente 14 ausgeübt, dass sich die innere Schneidkante 15 in das Material des Rohrendes 3 eingräbt und zumindest der Schenkel 17 an dem Schenkel 7 der Aufnahme 5 anliegt. Dadurch können Axialkräfte durch ein Herausziehen des Rohrendes 3 unmittelbar über das Schneidelement 14 bzw. den Schenkel 17 auf die Aufnahme 5 und den Fitting abgetragen werden.

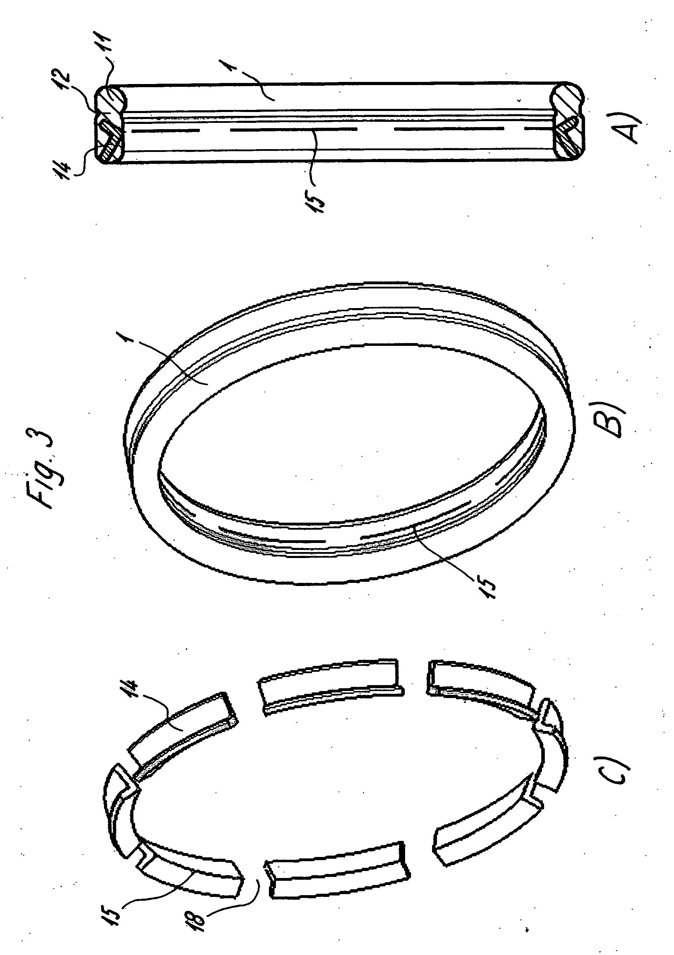

In Figur 3A ist das Dichtelement 1 im nicht montierten Zustand dargestellt. Ein Dichtring 11 ist beabstandet von dem Abschnitt angeordnet, in dem die Schneidelemente 14 eingelagert sind. Die Schneidelemente 14 erstrecken sich nur über einen Teil des Umfangs des Dichtelementes 1 und sind mit der Schneidkante 15 an der inneren Oberfläche des Dichtelementes 1 angeordnet. Von außen sieht das Dichtelement 1 wie ein länglicher Ring aus, der elastisch ist und daher leicht in eine Aufnahme 5 montiert werden kann (Figur 3B).

Wie in Figur 3C zu sehen ist, besitzt das Dichtelement 1 in diesem Ausführungsbeispiel acht einzelne Schneidelemente 14, die durch einen Spalt 18 jeweils voneinander beabstandet sind. In dem Spalt 18 ist lediglich elastisches Material vorgesehen, sodass das Dichtelement 1 insgesamt seine Elastizität für die Montage beibehält. Es ist auch möglich, statt acht Schneidelementen 14 auch nur zwei oder mehr Schneidelemente 14 vorzusehen.

In Figur 3D ist das Dichtelement 1 noch einmal im Schnitt dargestellt. Die Schneidelemente 14 sind in das Material des ringförmigen Körpers 10 eingelagert, wobei die Schneidelemente aus Stahl hergestellt sein können und das elastische Material beispielsweise aus Gummi, EPDM oder einem anderen geeigneten Werkstoff bestehen kann.

In einer alternativen Ausfuhrungsibrm sind die Schneidelemente nicht gekrümmt sonder als gerade schienenförmige Stegabschnitte ausgebildet. Dies erleichtert die Herstellung der Schneidelemente, die dann in der gewünschten Länge von einem Strang abgeschnitten werden können.

## Patentansprüche

1. Dichtelement (1) für eine Pressverbindung, mit einem im Wesentlichen ringförmigen Körper (10) aus einem elastischen Material, an dem an der Innenseite und an der Aussenseite mindestens eine umlaufende stetige Dichtkante (20, 21) ausgebildet ist, **dadurch gekennzeichnet, dass** in dem ringförmigen Körper mindestens ein Schneidelement (14) eingelagert ist, das beim Verpressen mit einer Schneidkante (15) aus dem elastischen Material herausbewegbar ist, wobei die Schneidkante (15) an einer inneren Oberfläche des Dichtelementes (1) angeordnet ist.

2. Dichtelement nach Anspruch 1, **dadurch gekennzeichnet, dass** die Schneidelemente (14) jeweils gekrümmt ausgebildet sind und über den Umfang verteilt angeordnet sind.

3. Dichtelement nach Anspruch 1, **dadurch gekennzeichnet, dass** die über den Umfang verteilt angeordneten Schneidelemente (14) jeweils als gerade Stegabschnitte ausgebildet sind.

4. Dichtelement nach einem der Ansprüche 1 bis 3, **dadurch gekennzeichnet, dass** die Schneidelemente (14) sich in radialer Richtung von einer inneren Oberfläche zu einer äußeren Oberfläche des Dichtelementes (1) erstrecken.

5. Dichtelement nach einem der Ansprüche 1 bis 4, **dadurch gekennzeichnet, dass** die Schneidelemente (14) im Querschnitt V-förmig ausgebildet sind.

6. Dichtelement nach einem der Ansprüche 1 bis 5, **dadurch gekennzeichnet, dass** die Schneidelemente (14) einen gegenüber der radialen Richtung schräg verlaufenden Schenkel (17) aufweisen, der sich bis zu einer Oberfläche des Dichtelementes (1) erstreckt.

7. Dichtelement nach einem der Ansprüche 1 bis 6, **dadurch gekennzeichnet, dass** benachbart zu dem Schneidelement (14) ein Dichtring (11) angeordnet ist, der über einen Steg (12) mit einem Abschnitt verbunden ist, in dem die Schneidelemente (14) eingelagert sind.

8. Dichtelement nach einem der Ansprüche 1 bis 7, **dadurch gekennzeichnet, dass** die Schneidelemente (14) aus Edelstahl hergestellt sind.

9. Dichtelement nach einem der Ansprüche 1 bis 8, **dadurch gekennzeichnet, dass** die Schneidelemente (14) im Querschnitt asymmetrisch ausgebildet sind.

10. Pressverbindung, insbesondere für den Installationsbereich, mit einem verpressbaren Stutzen (2) eines Fittings oder einer Armatur, in der ein Rohrende (3) einschiebbar ist und an dem eine Aufnahme (5) ausgebildet ist, **dadurch gekennzeichnet, dass** in der Aufnahme (5) ein Dichtelement (1) nach einem der vorhergehenden Ansprüche angeordnet ist.

## Claims

1. A seal element (1) for a press-fit connection, having an essentially ring-shaped body (10) made of an elastic material, on which at least one peripheral continuous sealing edge (20, 21) is implemented on the inner side and on the outer side, **characterized in that** at least one cutting element (14) is embedded in the ring-shaped body, which can be moved out of the elastic material with a cutting edge (15) upon compression, the cutting edge (15) being arranged on an inner surface of the seal element (1).

2. The seal element according to Claim 1, **characterized in that** the cutting elements (14) are each implemented as curved and are arranged distributed around the circumference.

3. The seal element according to Claim 1, **characterized in that** the cutting elements (14), which are arranged distributed around the circumference, are each implemented as linear web sections.

4. The seal element according to one of Claims 1 to 3, **characterized in that** the cutting elements (14) extend in the radial direction from an inner surface to an outer surface of the seal element (1).

5. The seal element according to one of Claims 1 to 4, **characterized in that** the cutting elements (14) are implemented as V-shaped in cross-section.

6. The seal element according to one of Claims 1 to 5, **characterized in that** the cutting elements (14) have a leg (17) running diagonally in relation to the radial direction, which extends up to a surface of the seal element (1).

7. The seal element according to one of Claims 1 to 6, **characterized in that** adjacent to the cutting element (14) a sealing ring (11) is arranged which is connected via a web (12) to a section in which the cutting elements (14) are embedded.

8. The seal element according to one of Claims 1 to 7, **characterized in that** the cutting elements (14) are produced from stainless steel.

9. The seal element according to one of Claims 1 to 8, **characterized in that** the cutting elements (14) are implemented as asymmetrical in cross-section.

10. A press-fit connection, in particular for plumbing fixtures, having a compressible connecting piece (2) of a fitting or a valve, into which a pipe end (3) is insertable and on which a receptacle (5) is implemented, **characterized in that** a seal element (1) according to one of the preceding claims is arranged in the receptacle (5).

## Revendications

1. Élément d'étanchéité (1) pour une liaison par pressage, avec un corps (10) essentiellement annulaire constitué d'un matériau élastique, sur lequel est formée une arête d'étanchéité continue périphérique (20, 21) du côté intérieur et du côté extérieur, **caractérisé en ce que** au moins un élément tranchant (14) est intégré dans le corps annulaire, l'élément tranchant étant apte à être retiré du matériau élastique avec une arête de coupe (15) lors du pressage, l'arête de coupe (15) étant agencée à une surface intérieure de l'élément d'étanchéité (1).

2. Élément d'étanchéité selon la revendication 1, **caractérisé en ce que** les éléments tranchants (14) sont conçus incurvés et répartis sur le pourtour.

3. Élément d'étanchéité selon la revendication 1, **caractérisé en ce que** les éléments tranchants (14) répartis sur le pourtour sont conçus chacun comme une section d'âme rectiligne.

4. Élément d'étanchéité selon l'une des revendications 1 à 3, **caractérisé en ce que** les éléments tranchants (14) s'étendent dans la direction radiale, d'une surface intérieure vers une surface extérieure de l'élément d'étanchéité (1).

5. Élément d'étanchéité selon l'une des revendications 1 à 4, **caractérisé en ce que** les éléments tranchants (14) sont conçus avec une section transversale en forme de V.

6. Élément d'étanchéité selon l'une des revendications 1 à 5, **caractérisé en ce que** les éléments tranchants (14) comportent une branche (17) s'étendant de façon oblique par rapport à la direction radiale, jusqu'à une surface de l'élément d'étanchéité (1).

7. Élément d'étanchéité selon l'une des revendications 1 à 6, **caractérisé en ce qu'**à côté de l'élément tranchant (14) se trouve une bague d'étanchéité (11) reliée, par le biais d'une âme (12), à une section dans laquelle sont intégrés les éléments tranchants (14).

8. Élément d'étanchéité selon l'une des revendications 1 à 7, **caractérisé en ce que** les éléments tranchants (14) sont fabriqués en acier inoxydable.

9. Élément d'étanchéité selon l'une des revendications 1 à 8, **caractérisé en ce que** les éléments tranchants (14) sont conçus avec une section transversale asymétrique.

10. Liaison par pressage, en particulier pour le domaine de l'installation, avec un embout (2) apte à être pressé d'une pièce de fixation ou d'une armature, dans laquelle peut être enfoncée une extrémité de tuyau (3) et sur laquelle est formée une admission (5), **caractérisée en ce qu'**un élément d'étanchéité (1) selon l'une des revendications précédentes est disposé dans l'admission (5).
